(19) Europäisches Patentamt
European Patent Office
Office européen des brevets

(11) Veröffentlichungsnummer: **0 622 417 A2**

(12) # EUROPÄISCHE PATENTANMELDUNG

(21) Anmeldenummer: **94105829.9**

(22) Anmeldetag: **15.04.94**

(51) Int. Cl.[5]: **C08L 67/06**, //(C08L67/06, 91:08,51:08),(C08L67/06,91:08, 53:00)

(30) Priorität: **30.04.93 DE 4314306**

(43) Veröffentlichungstag der Anmeldung: **02.11.94 Patentblatt 94/44**

(84) Benannte Vertragsstaaten: **AT BE DE ES FR GB IT NL SE**

(71) Anmelder: **BASF Aktiengesellschaft**
**Carl-Bosch-Strasse 38**
**D-67063 Ludwigshafen (DE)**

(72) Erfinder: **Hesse, Anton, Dr.**
**Peter-Nickel-Strasse 15**
**D-69469 Weinheim (DE)**
Erfinder: **Allspach, Thomas, Dr.**
**Berliner Strasse 10**
**D-67098 Bad Duerkheim (DE)**
Erfinder: **Peter, Roland, Dr.**
**Pfalzring 92**
**D-67112 Mutterstadt (DE)**

(54) **Verdunstungsarme ungesättigte Polyesterharze.**

(57) Die Erfindung betrifft verdunstungsarme ungesättigte Polyesterharze, die Paraffine sowie als Emulgatoren ein Block- oder Pfropfcopoylmerisat aus einem ethylenisch ungesättigten Monomeren und einem Polyalkylenether enthalten.

EP 0 622 417 A2

Die Erfindung betrifft verdunstungsarme, lagerstabile ungesättigte Polyesterharze, die einen ethylenisch ungesättigten Polyester, Styrol als Comonomeres, Paraffine zur Verhinderung der Styrolverdunstung, sowie einen Emulgator enthalten.

Es ist bekannt, daß Paraffine auf flüssigen Polyesterharzen einen dünnen Film bilden können, welcher die Verdunstung des Comonomeren Styrol vermindert. Eine optimale Kombination von Paraffinen ist in EP-A 941 offenbart. Die dort beschriebenen Polyesterharze zeichnen sich außer der geringen Styrolverdunstung auch durch eine gute Überlaminierbarkeit aus, d.h. durch eine ausreichende Haftung mehrerer Lagen von Harzlaminaten.

Zur Herstellung verdunstungsarmer Harze werden die Paraffine üblicherweise in die flüssigen Harze eingerührt. Sie werden dabei in feinverteilter Form im Harz dispergiert; die an der Oberfläche befindlichen Paraffin-Teilchen stellen dabei eine sehr dünne Schicht dar, die sich bei Veränderungen der Oberfläche, z.B. durch Rühren oder Umfüllen des Harzes immer wieder neu bildet.

Es hat sich nun gezeigt, daß diese feine Dispersion des Paraffins im Harz nicht stabil ist, im Laufe einiger Tage oder Wochen entmischt sich die Dispersion und die Paraffine schwimmen aufgrund ihres geringeren spezifischen Gewichts auf. Das darunter befindliche Harz enthält dann kein verdunstungshemmendes Paraffin mehr.

Nach EP-A 422 455 kann die Lagerstabilität von verdunstungsarmen Harzen durch Zusatz von pyrogener Kieselsäure, die sowohl hydrophile als auch hydrophobe Endgruppen aufweist, verbessert werden. Die Wirkung dieses Zusatzes ist aber auf einige wenige ungesättigte Polyesterharze beschränkt.

Die DE-A 25 54 930 beschreibt den Zusatz von Wasser-in-Öl- bzw. Öl-in-Wasser-Emulgatoren mit einem HLB-Wert zwischen 1,5 und 16, vorzugsweise von Sorbitanestern, zu verdunstungsarmen ungesättigten Polyesterharzen. Diese Emulgatoren verbessern zwar die Überlaminierbarkeit der Polyesterharze, sie sind aber nicht in der Lage, ihre Lagerstabilität zu erhöhen.

Der Erfindung lag also die Aufgabe zugrunde, verdunstungsarme ungesättigte Polyesterharze zu entwickeln, die auch nach mehreren Monaten ihre günstigen Eigenschaften nicht verlieren, bei denen also die Dispersion des verdunstungsmindernden Paraffinzusatzes im Polyesterharz auch nach längerem Lagern noch erhalten bleibt.

Diese Aufgabe wird erfindungsgemäß dadurch gelöst, daß man einem Harz, enthaltend

A. einen ungesättigten Polyester,
B. Styrol,
C. Paraffine

0,01 bis 8 Gew.-%, bezogen auf A + B, eines Block- oder Pfropfcopolymerisats aus einem ethylenisch ungesättgten Monomeren und einem Polyalkylenether als Emulgator D zusetzt.

Die DE-C 26 57 808 betrifft schrumpfarm härtbare ungesättigte Polyesterformmassen, die 0,1 bis 25, vorzugsweise 10 bis 20 Gew.-% eines Polyalkylenethermischpolymerisats enthalten. Dieses bewirkt, daß die Formmassen bei der üblichen Warmhärtung schrumpfarm zu Formteilen mit glatter Oberfläche und verbessertem Glanz aushärten. Der Zusatz von Paraffinen zur Verhinderung der Styrolverdunstung und die dabei auftretenden Probleme bezüglich Lagerstabilität sind in der genannten Druckschrift nicht angesprochen.

Zu den einzelnen Komponenten ist folgendes zu sagen:

A. Ungesättigte Polyester

Ungesättigte Polyester A sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß. Als mehrwertige, insbesondere zweiwertige, gegebenenfalls ungesättigte Alkohole eignen sich die üblichen insbesondere acyclische Gruppen, cyclische Gruppen als auch beide Arten von Gruppen aufweisende Alkandiole und Oxaalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(p-hydroxycyclohexyl)-propan, Trimethylolpropanmonoallylether oder Butendiol-1,4. Bevorzugt sind Ethylenglykol, Propylenglykol, Diethylenglykol und deren Mischungen.

Ferner können ein-, drei- oder höherwertige Alkohole, wie z.B. Ethylhexanol, Fettalkohole, Benzylalkohole, 1,2-Di-(allyloxy)-propanol-3, Glycerin, Pentaerythrit oder Trimethylolpropan in untergeordneten Mengen mitverwendet werden. Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäuren bzw. deren Derivate sind zweibasische olefinisch ungesättigte, vorzugsweise $\alpha,\beta$-olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, $\alpha$-Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Endomethylentetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Propionsäue, Benzoesäure, 1,2,4-Benzoltricarbonsäure oder 1,2,4,5-Benzoltetracarbonsäure. Vorzugsweise verwendet werden Maleinsäure bzw. deren Anhydrid, Fumarsäure und o-Phthalsäureanhydrid.

Das Molverhältnis von ungesättigten zu gesättigten Dicarbonsäuren liegt vorzugsweise zwischen 1:0 und 1:2,5.

Gemische ungesättigter Polyester, darunter auch solche, die in Styrol nur beschränkt löslich sind und leicht kristallisieren, können ebenfalls vorteilhaft eingesetzt werden. Solche leicht kristallisierenden ungesättigten Polyester können z.B. aus Fumarsäure, Adinpinsäure, Terephthalsäue, Ethylenglykol, Butandiol-1,4, Hexandiol-1,6 und Neopentylglykol aufgebaut sein.

Geeignet sind auch ungesättigte Polyester mit vorzugsweise endständigen Doppelbindungen.

Die ungesättigten Polyester besitzen Säurezahlen von 0,5 bis 100, vorzugsweise von 2 bis 20 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen bei Temperaturen zwischen 150 und 220 °C aus ihren Ausgangskomponenten nach kontinuierlichen oder diskontinuierlichen Verfahren hergestellt.

Ebenfalls geeignet sind ungesättigte Polyester, die mit Cyclopenten- oder Cyclohexengruppen modifiziert sind.

Von dem Begriff ungesättigte Polyester im Sinne der Erfindung sind auch Vinylester mit umfaßt.

Unter Vinylestern versteht man gemeinhin Umsetzungsprodukte von Polyepoxiden mit ungesättigten Monocarbonsäuren, vorzugsweise Methacrylsäure. Auch diese Produkte werden in ungesättigten Monomeren, vorzugsweise Styrol, gelöst. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschreiben werden, weisen dagegen höhere Wärmeformbeständigkeiten, aber geringere Zähigkeiten auf.

Kennzeichnend für die Klasse der Vinylesterharze ist die Gruppe

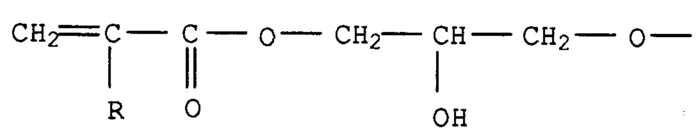

mit R = H oder $CH_3$. Schließlich sind auch Vinylesterurethan als ungesättigte Polyester geeignet. Sie weisen im allgemeinen folgende Gruppen auf:

a)

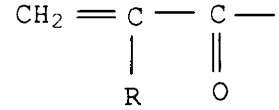

(mit R = H oder $CH_3$).

a)

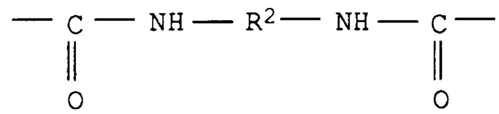

(mit $R^2$ = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls

c) - O - $R^3$ - O - (mit $R^4$ = aliphatischer, cycloaliphatischer oder aromatischer Rest mit 2 bis 100 C-Atomen).

Vorzugsweise ist das Vinylesterurethan ein Umsetzungsprodukt aus

- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,

wobei bei der Umsetzung das Gewichtsverhältnis Isocyanat: (Alkohol + Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

B. Monomere

Die ungesättigten Polyesterharze enthalten als Monomeres Styrol. Das Verhältnis Polyester:Styrol liegt dabei vorzugsweise zwischen 20:80 und 90:10, insbesondere zwischen 50:50 und 75:25. Styrol als Comonomeres kann teilweise durch andere übliche ethylenisch polymerisierbare Monomere ersetzt werden, z.B. Vinylverbindungen, wie substituierte Styrole, Ester der Acryl- und Methacrylsäure oder Allylverbindungen, wie Diallylphthalat.

C. Als Paraffine sind die üblichen höheren Kohlenwasserstoffe geeignet, und zwar insbesondere feste wachsartige Substanzen. Bevorzugt sind Mischungen aus Paraffinen mit einem Schmelzpunkt zwischen 25 °C und 50 °C und solchen mit einem Schmelzpunkt zwischen 51 °C und 100 °C, wie in EP-A 941 beschrieben. Auch Mischungen mit Paraffinölen sind geeignet, wodurch die Verträglichkeit mit dem Polyesterharz erhöht wird. Besonders bevorzugt sind Gemische aller drei genannten Paraffine im Verhältnis von etwa 1:1:1. Die Paraffine können pyrogene Kieselsäure, wie in EP-A 422 455 beschrieben, zugemischt enthalten. Die Komponente C ist im Harz vorzugsweise in Mengen von 0,02 bis 2 Gew.-%, insbesondere von 0,05 bis 0,5 Gew.-%, bezogen auf A + B, enthalten.

D. Das Harz enthält erfindungsgemäß als Emulgator 0,01 bis 8, vorzugsweise 0,1 bis 5 Gew.-% eines Block- oder Pfropfcopolymerisats aus einem ethylenisch ungesättigten Monomeren und einem Polyalkylenether. Derartige Copolymerisate werden zweckmäßigerweise hergestellt durch Polymerisation von 99 bis 60 Gew.-% eines Monomeren in Gegenwart von 1 bis 40 Gew.-% eines Polyalkylenethers mit einem Molekulargewicht von 500 bis 50.000, insbesondere von 2.000 bis 40.000. Dabei muß nicht unbedingt eine vollständige Anbindung der wachsenden Polymerkette an den Polyalkylenether erfolgen, d.h., es können auch Mischungen entstehen aus Block- bzw. Pfropfcopolymerisat einerseits und untergeordneten Mengen an unverändertem Polyalkylenether und Homopolymerisat des ethylenisch ungesättigten Monomeren andererseits. Die Block- bzw. Pfropfcopolymerisate haben bevorzugt HLB-Werte zwischen 0,1 und 1,5.

Bevorzugte Polyalkylenether sind z.B. Polyethylenoxid, Polypropylenoxid, sowie Copolymere aus Ethylenoxid und Propylenoxid. Zur Copolymerisation mit den Monomeren können die Polyalkylenether als solche eingesetzt werden oder Polyalkylenether, die ungesättigten Gruppen enthalten. Letztere können entweder dadurch erhalten werden, daß man bei der Herstellung des Polyalkylenethers ungesättigte Epoxide zusetzt oder daß man die Hydroxylendgruppen des Polyalkylenethers mit organischen Verbindungen, die sowohl eine ungesättigte Doppelbindung als auch eine reaktive Gruppe enthalten, umsetzt. Beispiele sind ungesättigte Carbonsäuren und deren Derivate, wie Acrylsäure, Methacrylsäure, Maleinsäureanhydrid, Bernsteinsäureanhydrid, ferner hydroxylgruppenhaltige ungesättigte Carbonsäureester im Gemisch mit Diisocyanaten. Die gesättigten oder ungesättigten Polyalkylenether werden auf übliche Weise mit ethylenisch ungesättigten Monomeren in Gegenwart von radikalischen Initiatoren bei erhöhten Temperaturen block- bzw. pfropfcopolymerisiert. Bevorzugte Monomere sind Styrol, Acrylate und Methacrylate sowie Mischungen davon. Weitere Einzelheiten über Herstellung und Struktur der Polyalkylenethercopolymerisate finden sich in der DE-C 26 57 808.

Neben den Komponenten C und D können die erfindungsgemäßen Harze noch weitere übliche Zusatzstoffe enthalten, wie Verstärkungsfasern, z.B. Glas- und Kohlenstoff-Fasern; Füllstoffe, z.B. Kreide, Quarz, Aluminiumoxidhydrat; Inhibitoren, z.B. Hydrochinon; Polyfunktionelle Hydroxylverbindungen, z.B.

Ethylenglykol, Trimethylolpropan; Gleitmittel wie z.B. Stearate; Flammschutzmittel, insbesondere Halogenverbindungen; Härtungsbeschleuniger, z.B. Cobaltkomplexe oder aromatische Amine, Thixotropiemittel, z.B. hochdisperse Kieselsäure.

Die Einarbeitung der Komponenten C und D sowie gegebenenfalls weiterer Zusatzstoffe erfolgt durch Einrühren, wobei die Zusätze, soweit möglich, in Styrol gelöst sind. Die bevorzugten kalthärtenden ungesättigten Polyesterharze enthalten 0,01 bis 0,5 Gew.-% eines Cobalt- oder Aminbeschleunigers; die erforderlichen Peroxide, z.B. Methylethylketonperoxid oder Benzoylperoxid, werden dem Harz erst kurz vor der Härtung zugesetzt.

Die erfindungsgemäßen verdunstungsarmen ungesättigten Polyesterharze werden bevorzugt dort eingesetzt, wo eine starke Styrolverdunstung zu befürchten ist, z.B. bei der Herstellung von GFK-Formteilen durch Handlaminieren, Faserspritzen und Faserwickeln, ferner beim RTM-Verfahren, bei der Pultrusion und beim Gießen und Naßpressen.

Die in den Beispielen genannten Teile und Prozente beziehen sich auf das Gewicht.

## Beispiele

### UP-Harze A

A 1

Ein ungesättigter Polyester mit Säurezahl 48 wurde hergestellt durch Schmelzekondensation aus Maleinsäureanhydrid, o-Phthalsäureanhydrid, Propylenglykol und Ethylenglykol im Molverhältnis 1:2:0,75:2,38. Der ungesättigte Polyester wurde 65 %ig in Styrol gelöst und mit 100 ppm Hydrochinon stabilisiert.

A 2

Ein ungesättigter Polyester mit Säurezahl 32 wurde hergestellt durch Schmelzekondensation von Maleinsäureanhydrid, o-Phthalsäureanhydrid, Ethylenglykol und Diethylenglykol im Molverhältnis 1:0,5:0,75:0,75. Der ungesättige Polyester wurde 65%ig in Styrol gelöst und mit 100 ppm Toluhydrochinon stabilisiert.

A 3

Ein ungesättigter Polyester mit Säurezahl 46 wurde hergestellt durch Schmelzekondensation von Maleinsäureanhydrid, o-Phthalsäureanhydrid und Propylenglykol im Molverhältnis 1:2:3,13. Der ungesättigte Polyester wurde 65 %ig in Styrol gelöst und mit 100 ppm Hydrochinon stabilisiert.

### Paraffin C

C1

Es wurde eine Mischung bei 60 °C hergestellt aus
100 Teilen Paraffin, Fp. 46-48 °C
50 Teile Paraffinöl
25 Teile Aerosil®
und 27%ig in Styrol aufgenommen. Nach Inhibierung mit 100 ppm t.Butylbrenzkatechin und Abkühlung auf 20 °C resultierte eine halbfeste Suspension.

C2

Es wurde eine Mischung bei 60 °C hergestellt aus
100 Teilen Paraffin, Fp. 46-48 °C
50 Teile Paraffinöl
und auf 20 °C abgekühlt. Man erhielt eine feste wachsartig erstarrte Masse.

C3

Paraffinwachs mit Fp. 46-48 °C

Polyalkylenethercopolymerisate D

D1

97,3 Teile eines difunktionellen Polyethylenglykols vom Molekulargewicht 9000, 44,5 Teile Toluol, 0,97 Teile Maleinsäureanhydrid und 1,05 Teile Bernsteinsäureanhydrid wurden unter Rühren in Stickstoffatmosphäre aufgeschmolzen und 1 Stunde bei 130 °C gehalten. In zwei getrennten Zuläufen wurden eine Lösung von 8,9 Teilen Benzoylperoxid in 41,3 Teilen Toluol innerhalb von 2 Stunden und 475,2 Teile Styrol innerhalb von 1 Stunde zudosiert. Nach weiteren 2 Stunden bei 130 °C resultierte eine viskose Dispersion, die zunächst mit 2 Teilen Ameisensäure 15 Minuten gerührt, auf 120 °C abgekühlt, mit 0,17 Teilen Hydrochinon versetzt und schließlich mit 825 Teilen Styrol aufgenommen wurde. Es entstand eine trübe Mischung mit einer Viskosität (23 °C) von 280 [mPa.s] und einem Trockengehalt von 36,5 Gew.-%.

D2

100 Teile eines difunktionellen Polyalkylenethers aus Ethylenoxid und Propylenoxid mit einer blockartigen Struktur und einem Molekulargewicht von 14000 (Pluronic® F 108, BASF Wyandotte Corporation, USA) und 0,7 Teile Maleinsäureanhydrid wurden unter Stickstoff aufgeschmolzen und 1 Stunde bei 130 °C gerührt. In zwei getrennten Zuläufen wurden eine Mischung aus 8,9 Teilen Benzoylperoxid in 82,6 Teilen Toluol innerhalb von 2 Stunden, und 475,2 Teile Styrol innerhalb von 1 Stunde zudosiert. Nach weiteren 2 Stunden bei 130 °C resultierte eine vikose Dispersion, die zunächst mit drei Teilen Ameisensäure 15 Minuten gerührt, auf 120 °C abgekühlt, mit 0,17 Teilen Hydrochinon inhibiert und schließlich mit 825 Teilen Styrol aufgenommen wurde. Es entstand eine trübe Mischung mit einer Viskosität (23 °C) von 530 [mPa.s] und einem Trockengehalt von 39,8 [Gew.-%].

D3

48,8 Teile eines difunktionellen Polyethylenglykols vom Molekulargewicht 9000, 22,3 Teile Isobutylacetat, 0,49 Teile Maleinsäureanhydrid und 0,53 Teile Bernsteinsäureanhydrid wurden unter Rühren in Stickstoffatmosphäre aufgeschmolzen und 1 Stunde bei 130 °C gerührt. In zwei getrennten Zuläufen wurden eine Mischung von 8,9 Teilen Benzoylperoxid und Isobutylacetat innerhalb von 2 Stunden und eine Mischung von 118,8 Teilen Styrol und 118,8 Teilen 2-Ethylhexylacrylat innerhalb von einer Stunde zudosiert. Nach weiteren 2 Stunden bei 130 °C resultierte eine viskose Flüssigkeit, die zunächst mit 1,5 Teilen Ameisensäure 30 Minuten gerührt, auf 120 °C abgekühlt mit 0,085 Teilen Hydrochinon versetzt und schließlich mit 412,5 Teilen Styrol aufgenommen wurde. Es entstand eine trübe Mischung mit einer Viskosität (23 °C) von 360 [mPa.s] und einem Trockengehalt von 35,3 [Gew.-%].

D4

100 Teile eines difunktionellen Polyethylenglykols vom Molekulargewicht 35.000 wurden unter Stickstoff auf 130 °C erwärmt und in zwei getrennten Zuläufen eine Lösung von 8,9 Benzoylperoxid in 82,6 Teilen Toluol innerhalb von 2 Stunden und 475,2 Teile Styrol innerhalb von 1 Stunde zudosiert. Nach weiteren 2 Stunden bei 130 °C resultierte eine viskose Dispersion, die zunächst mit 3 Teilen Ameisensäure 15 Minuten gerührt, danach auf 120 °C abgekühlt, mit 0,17 Teilen Hydrochinon versetzt und schließlich mit 825 Teilen Styrol aufgenommen wurde. Es entstand eine Dispersion mit einer Viskosität (23 °C) von 280 [mPa.s] und einem Trockengehalt von 36,2 [Gew.-%]

Beispiele

1. Zur Prüfung der Lagerfähigkeit wachshaltiger UP-Harze wurde das Aufschwimmen der Paraffin/Styrol-Phasen in folgenden Gemischen beurteilt:
100 Teile UP-Harz A1 bzw. A2
1,5 Teile Wachsmischung C1 bzw. 0,4 Teile Wachsmischung C2
1 bzw. 2 Teile Polyalkylenethercopolymerisate D1 bis D3

Die Komponenten wurden bei 60 °C gerührt und abgekühlt auf 20 °C. Nach Abfüllung von Proben in Reagenzgläsern (2x18 cm) wurden die etwa 12 cm hohen Harzsäulen styroldicht verschlossen und bei Raumtemperatur das Ausschwimmen der Paraffinphase beurteilt. Die Ergebnisse in Tabelle 1 zeigen, daß die erfindungsgemäßen Harze mit einem Gehalt an Polyalkylenethercopolymerisaten D im Beobachtungszeitraum von 30 Tagen keine styrolische Paraffinphase als Schicht ausscheiden, sondern eine homogene Wachsverteilung gewährleisten. Dagegen sondern die nicht erfindungsgemäßen Harze der Vergleichsbeispiele bereits innerhalb von 24 Stunden eine oben schwimmende styrolische Paraffinphase ab. Die Dicke dieser Schicht nach 4 Tagen Lagerzeit ist aus der Tabelle zu entnehmen.

Tabelle 1: Lagerstabilität wachshaltiger UP-Harze

| Versuche | Vgl. | 1 | 2 | Vgl. | 3 | 4 | Vgl. | 5 | 6 | 7 | 8 | 9 | 10 |
|---|---|---|---|---|---|---|---|---|---|---|---|---|---|
| Teile A1 | 100 | 100 | 100 | - | - | - | - | - | 100 | - | 100 | - | 100 |
| Teile A2 | - | - | - | 100 | 100 | 100 | 100 | 100 | - | 100 | - | 100 | - |
| Teile C1 | 1.5 | 1.5 | 1.5 | 1.5 | 1.5 | 1.5 | - | - | 1.5 | 1.5 | 1.5 | 1.5 | 1.5 |
| Teile C2 | - | - | - | - | - | - | 0.4 | 0.4 | - | - | - | - | - |
| Teile D1 | - | 1 | 2 | - | 1 | 2 | - | 2 | - | - | - | - | - |
| Teile D2 | - | - | - | - | - | - | - | - | 2 | 2 | - | - | - |
| Teile D3 | - | - | - | - | - | - | - | - | - | - | 2 | 2 | - |
| Teile D4 | - | - | - | | | | | | | | | | 2 |
| | | | | | | | | | | | | | |
| Ausschwimmen der Paraffinphase | ja | nein | nein | ja | nein | nein | ja | nein | nein | nein | nein | nein | nein |
| Lagerzeit [d] | 1 | 20 | 20 | 1 | 20 | 20 | 1 | 20 | 20 | 20 | 20 | 20 | 20 |
| Dicke der Paraffinphase nach 4 d [mm] | 5 | 0 | 0 | 9 | 0 | 0 | 9 | 0 | 0 | 0 | 0 | 0 | 0 |

In Tabelle 2 sind die Ergebnisse weiterer Vergleichsversuche aufgeführt. Ausgehend von den Beispielen 3 und 4 wurden statt 1 bzw. 2 Teilen des erfindungsgemäßen Emulgators D1 (HLB von 0,8) folgende Substanzen eingesetzt:

Substanz D 5: ungepfropftes Polyethylenglykol mit Molekulargewicht 9000 in einer Menge (0,1 Teile), die es bezüglich Polyethylenglykolgehalt mit den Beispielen 3 und 4 vergleichbar macht.

Substanz D 6: ein Fettalkohol ($C_{16-18}$)-Polyethylenglykol-Emulgator mit HLB von 12,2, gemäß DE-A 25 54 930

Tabelle 2

| Lagerstabilität wachshaltiger UP-Harze | | | | |
|---|---|---|---|---|
| Versuche | Beispiel 3 | Beispiel 4 | Vergleich | Vergleich |
| Teile A2 | 100 | 100 | 100 | 100 |
| Teile C1 | 1,5 | 1,5 | 1,5 | 1,5 |
| Teile D1 (7,2 % PEG) | 1 | 2 | - | - |
| Teile D5 (100 % PEG) | - | - | 0,1 | - |
| Teile D6 (61 % PEG) | - | - | - | 1,5 |
| Dicke der Paraffin-phase nach 4d [mm] | 0 | 0 | 13 | 11 |

Beispiel 11

Bei 50 °C wurde durch Rühren eine Mischung hergestellt aus:
150 Teilen UP-Harz A1
0,15 Teilen Wachs C3 und
0,75 Teilen Alkylenethermischpolymerisat D1.

Nach Abkühlung auf 23 °C wurden 1,5 Teile Methylethylketonperoxid (50 %ig) und 0,6 Teile styrolische Cobaltoktoatlösung (1%ig an $Co^{2+}$) eingerührt und mit dieser katalysierten Mischung ein dreilagiges Laminat durch Tränken von Glasfasermatten (Vetrotex® M123) der Abmessungen 20x30 cm hergestellt. Zur Simulation einer schlechten Verarbeitung wurde auf die Mitte der Laminatoberfläche eine katalysierte Harzpfütze (ca. 4 cm Durchmesser) ausgegossen und zusammen mit dem Laminat innerhalb von 24 Stunden gehärtet (23 °C). Eine Kante des Laminats wurde mit einer Folie abgedeckt (spätere Sollbruchstelle) und wie oben ein weiteres dreilagiges Laminat überlaminiert. Nach 24 Stunden bei Raumtemperatur wurden beide Laminathälften durch Eintreiben eines Keils an der mit Folie abgedeckten Seite voneinander getrennt. Die Bruchfläche zeigte zahlreiche ausgerissene Fasern, ein Beweis für gute Laminathaftung. Auch der gehärtete Reinharzfleck wies Risse und deutliche Formstoffausbrüche auf, was ebenfalls auf eine gute Materialhaftung zurückzuführen war.

**Patentansprüche**

**1.** Verdunstungsarme ungesättigte Polyesterharze, enthaltend
   A. einen ungesättigten Polyester,
   B. Styrol
   C. 0,02 bis 2 Gew.-%, bezogen auf A + B, eines Paraffins,
   D. 0,01 bis 8 Gew.-%, bezogen auf A + B, eines Emulgators,

   dadurch gekennzeichnet, daß die Komponente D ein Block- oder Pfropfcopolymerisat aus einem ethylenisch ungesättigten Monomeren und einem Polyalkylenether ist.

**2.** Polyesterharze nach Anspruch 1, dadurch gekennzeichnet, daß die Komponente C wachsartige Paraffine mit einem Schmelzpunkt von höchstens 100°C sind, vorzugsweise Mischungen von Paraffinen mit unterschiedlichem Schmelzpunkt.

**3.** Polyesterharz nach Anspruch 1, dadurch gekennzeichnet, daß die Komponente D durch Polymerisation von 99 bis 60 Gew.-% eines ethylenisch ungesättigten Monomeren, vorzugsweise von Styrol oder eines Acrylesters, in Gegenwart von 1 bis 40 Gew.-% eines Polyalkylenethers mit einem Molekulargewicht zwischen 500 und 50.000 hergestellt wurde.

**4.** Polyesterharz nach Anspruch 1, dadurch gekennzeichnet, daß der Emulgator D ein Öl-in-Öl-Emulgator mit einem HLB-Wert unterhalb von 1,2 ist.

**5.** Kalthärtendes Polyesterharz nach Anspruch 1, dadurch gekennzeichnet, daß es 0,01 bis 0,5 Gew.-%, bezogen auf A + B eines üblichen Cobalt- oder Amin-Beschleunigers enthält.

**6.** Verwendung der Polyesterharze nach Anspruch 1 zur Herstellung von GFK-Formteilen durch Handlaminieren, Faserspritzen oder Faserwickeln.